# EUROPÄISCHE PATENTSCHRIFT

(11) **EP 4 275 973 B1**
(45) Veröffentlichungstag und Bekanntmachung des Hinweises auf die Patenterteilung: **30.07.2025**
(21) Anmeldenummer: 23172119.2
(22) Anmeldetag: 08.05.2023
(51) Int. Cl.: B60T 13/68, F02D 41/20

(54) **STROMVERSORGUNGSSCHALTUNG FÜR EINEN AKTUATOR EINES MAGNETVENTILS, VENTILANORDNUNG FÜR EIN BREMSSYSTEM EINES KRAFTFAHRZEUGS, UND VERFAHREN ZUR STROMVERSORGUNG EINES AKTUATORS EINES MAGNETVENTILS**
POWER SUPPLY CIRCUIT FOR AN ACTUATOR OF A SOLENOID VALVE, VALVE ASSEMBLY FOR A BRAKING SYSTEM OF A MOTOR VEHICLE, AND METHOD FOR SUPPLYING POWER TO AN ACTUATOR OF A SOLENOID VALVE
CIRCUIT D'ALIMENTATION ÉLECTRIQUE POUR UN ACTIONNEUR D'UNE ÉLECTROVANNE, ENSEMBLE SOUPAPE POUR UN SYSTÈME DE FREINAGE D'UN VÉHICULE AUTOMOBILE ET PROCÉDÉ D'ALIMENTATION EN COURANT D'UN ACTIONNEUR D'ÉLECTROVANNE

(30) Priorität: 11.05.2022 DE 102022111814
(43) Veröffentlichungstag der Anmeldung: 15.11.2023
(73) Patentinhaber: KNORR-BREMSE Systeme für Nutzfahrzeuge GmbH, 80809 München (DE)
(72) Erfinder: BELLING, Michael, 71272 Renningen (DE); DRAYSS, Dominikus, 74731 Walldürn (DE); KAUFMANN, Christian, 71063 Sindelfingen (DE); MATT, Alexander, 76646 Bruchsal (DE)

(56) Entgegenhaltungen:
- DE-A1- 102011 002 544
- DE-A1- 102021 201 015

## Beschreibung

Die vorliegende Erfindung betrifft die Stromversorgung von Magnetventilen. Insbesondere betrifft die vorliegende Erfindung eine Stromversorgungsschaltung und ein Verfahren zur Stromversorgung für einen Aktuator eines Magnetventils, insbesondere eines Magnetventils in einem Bremssystem eines Kraftfahrzeugs.

Moderne Kraftfahrzeug-Bremssysteme umfassen häufig eine Mehrzahl von Magnetventilen. Die Magnetventile können beispielsweise die erste Stufe von Relaisventil-Anordnungen bilden, welche häufig in modernen Bremssystemen Verwendung finden. Dabei sind die Magnetventile Vorsteuerventile. Sie sollen dazu beitragen, den gewünschten Bremsdruck möglichst schnell und genau zu regeln. Die Aktuatoren solcher Magnetventile sind häufig Elektromagnete. Diese werden im Betrieb mit signifikanten Strömen beaufschlagt, und es ergeben sich erhebliche gespeicherte Energien in den Elektromagneten. Beim Abschalten der Elektromagneten müssen diese Energien abgebaut werden. Bisherige Stromversorgungsschaltungen und Verfahren zur Stromversorgung von Aktuatoren von Magnetventilen sind bezüglich des Abschaltverhaltens nicht vollkommen zufriedenstellend.

DE 10 2021 201015 A1 offenbart eine Vorrichtung zur Ansteuerung eines elektrischen Magnetventils, wobei das Magnetventil zwei elektrische Anschlüsse sowie elektrische Schaltmittel aufweist, wobei über die Schaltmittel zumindest einer der Anschlüsse mit einer Versorgungsspannung und der jeweils andere Anschluss mit einem Massepotential verbunden werden kann, wobei durch eine pulsweitenmodulierte Ansteuerung der Schaltmittel die Position des Magnetventils steuerbar ist sowie an zumindest einem der Anschlüsse des Magnetventils zumindest eine Freilaufdiode vorgesehen ist.

DE 10 2011 002544 A1 offenbart ein Magnetventil, umfassend eine elektromagnetische Spule mit einer Spulenachse, einen innerhalb der Spule angeordneten, in Richtung der Spulenachse beweglichen Anker, ein mit dem Anker verbundenes Ventilschließglied, einen Ventilsitz, eine das Ventilschließglied und/oder den Anker in Schließrichtung belastende Schließfeder sowie einen koaxial zum Anker fest angeordneten Kern aus ferromagnetischen Material.

Es wäre wünschenswert, eine Stromversorgungsschaltung für einen Aktuator eines Magnetventils und ein Verfahren zur Stromversorgung eines Aktuators eines Magnetventils bereitzustellen, welche ein beim Abschalten der Stromversorgung verbessertes Verhalten aufweisen. Weiterhin wäre es wünschenswert, eine Ventilanordnung für ein Bremssystem eines Kraftfahrzeugs und ein Bremssystem für ein Kraftfahrzeug bereitzustellen, bei denen die verbesserte Abschaltung zum Tragen kommt.

Beispielhafte Ausführungsformen der Erfindung umfassen eine Stromversorgungsschaltung für einen Aktuator eines Magnetventils, aufweisend: einen Eingangsanschluss mit einem ersten Eingangspol und einem zweiten Eingangspol, wobei der Eingangsanschluss mit einer externen elektrischen Energiequelle koppelbar ist; einen Ausgangsanschluss mit einem ersten Ausgangspol und einem zweiten Ausgangspol, wobei der Ausgangsanschluss mit einer Induktivität des Aktuators des Magnetventils koppelbar ist; einen ersten Stromversorgungspfad,
der den ersten Eingangspol mit dem ersten Ausgangspol verbindet; einen zweiten Stromversorgungspfad, der den zweiten Eingangspol mit dem zweiten Ausgangspol verbindet; ein selektiv leitendes Bauteil, das zwischen dem zweiten Stromversorgungspfad und dem ersten Stromversorgungspfad gekoppelt ist, wobei das selektiv leitende Bauteil ein unidirektional leitendes Bauteil oder ein gesteuertes selektiv leitendes Bauteil ist; einen ersten Schalter, der ausgangsseitig von dem selektiv leitenden Bauteil in dem ersten Stromversorgungspfad angeordnet ist, wobei der erste Schalter eine Begrenzungsspannung aufweist, bei der er unabhängig vom Öffnungszustand leitend ist; und einen zweiten Schalter, der eingangsseitig von dem selektiv leitenden Bauteil in dem ersten Stromversorgungspfad oder dem zweiten Stromversorgungspfad angeordnet ist; wobei die Stromversorgungsschaltung eingerichtet ist, für das Abschalten der Induktivität den ersten Schalter und den zweiten Schalter zu öffnen und einen Löschkreis bereitzustellen, welcher den ersten Schalter, die Induktivität und das selektiv leitende Bauteil umfasst.

Beispielhafte Ausführungsformen der Erfindung ermöglichen eine vergleichsweise schnelle Entladung der Induktivität beim Abschalten und eine vergleichsweise geringe Verlustleistung während des Abschaltvorgangs. Durch das Öffnen des ersten Schalters und des zweiten Schalters entsteht ein Löschkreis, der den ersten Schalter, das selektiv leitende Bauteil und die Induktivität umfasst. Die Induktivität treibt den Strom weiter und sorgt somit für den Abbau der gespeicherten Energie über den Löschkreis. Dabei fällt an dem ersten Schalter die Begrenzungsspannung ab, da der Schalter geöffnet ist und lediglich die Funktionalität der vom Öffnungszustand unabhängigen Leitung bei Begrenzungsspannung zur Verfügung steht. Durch das Öffnen des zweiten Schalters findet eine Entkopplung zwischen externer elektrischer Energiequelle und Stromversorgungsschaltung statt. Das wiederum bewirkt, dass die in der Induktivität gespeicherte Energie ohne Interaktion mit der externen elektrischen Energiequelle abgebaut werden kann. Insbesondere kann keine Energie in den Löschkreis durch die externe elektrische Energiequelle nachgefüttert werden. Im Vergleich zu einer hypothetischen Schaltungsanordnung ohne den zweiten Schalter fällt beim Abschalten der Induktivität eine höhere Spannung über der Induktivität ab, der Strom durch die Induktivität führt zu einem schnelleren Energieverbrauch und fällt schneller ab. Da der Abschaltvorgang schneller vonstattengehen kann und eine geringere Verlustleistung anfällt, kann die Stromversorgungsschaltung insgesamt weniger belastet werden und eine höhere Zuverlässigkeit erreichen.

Die Stromversorgungsschaltung ist eingerichtet, für das Abschalten der Induktivität den ersten Schalter und den zweiten Schalter zu öffnen. Insbesondere kann die Stromversorgungsschaltung eine Steuerung bzw. eine Steuerschaltung aufweisen, die für das Abschalten der Induktivität den ersten Schalter und den zweiten Schalter öffnet. Weiter insbesondere kann die Steuerung bzw. Steuerschaltung eingerichtet sein, den ersten Schalter und den zweiten Schalter koordiniert zu öffnen. Die Stromversorgungsschaltung kann eingerichtet sein, den ersten Schalter und den zweiten Schalter für das Abschalten der Induktivität im Wesentlichen gleichzeitig zu öffnen, d. h. den ersten Schalter und den zweiten Schalter gleichzeitig oder in enger zeitlicher Abfolge zu öffnen. Je länger der erste Schalter und der zweite Schalter für das Abschalten der Induktivität gemeinsam geöffnet sind, desto stärker kommen die oben genannten Effekte der schnellen Entladung und geringen Verlustleistung zum Tragen.

Der erste Schalter weist eine Begrenzungsspannung auf, bei der er unabhängig vom Öffnungszustand leitend ist. Dies bedeutet, dass der erste Schalter, auch wenn er auf offen geschaltet ist / geöffnet ist, Strom leitet, wenn die Begrenzungsspannung anliegt. In anderen Worten, die Begrenzungsspannung ist eine Sicherheitsspannung, bei der der erste Schalter leitend wird. Diese Sicherheitsspannung wird auch als Klemmspannung bezeichnet. Auf diese Weise kann ein übermäßiger, potentiell für die Integrität des ersten Schalters gefährlicher Ladungsaufbau an dem ersten Schalter verhindert werden. Wenn ein Strom durch den ersten Schalter gezwungen wird, kann der erste Schalter so ausgeführt sein, dass die Begrenzungsspannung anliegt, unabhängig davon, wie hoch der durch den ersten Schalter gezwungene Strom ist.

Die Stromversorgungsschaltung weist ein selektiv leitendes Bauteil auf, das zwischen dem zweiten Stromversorgungspfad und dem ersten Stromversorgungspfad gekoppelt ist.

Das selektiv leitende Bauteil kann ein unidirektional leitendes Bauteil sein, insbesondere ein unidirektional leitendes Bauteil, das unter bestimmten Voraussetzungen in eine vorbestimmte Richtung stromleitend ist. Das unidirektional leitende Bauteil wird als unidirektional leitend bezeichnet, weil es nur in eine Richtung Strom durchlässt; zumindest bei den Spannungen, die beim gewöhnlichen Betrieb der Stromversorgungsschaltung auftreten. Insbesondere führt das unidirektional leitende Bauteil keinen Strom, wenn der erste Schalter und der zweite Schalter geschlossen sind und die Stromversorgungsschaltung Strom von der externen elektrischen Energiequelle an die Induktivität des Aktuators des Magnetventils liefert. Das unidirektional leitende Bauteil ist so angeordnet, dass es beim Abschalten der Induktivität in dem Löschkreis Strom führen kann. Das unidirektional leitende Bauteil führt auf Grund seiner inhärenten Eigenschaften und/oder auf Grund seiner Verschaltung nur in eine Richtung Strom, ist somit auf Grund seiner inhärenten Eigenschaften und/oder seiner Verschaltung ein selektiv leitendes Bauteil.

Das selektiv leitende Bauteil kann alternativ ein gesteuertes selektiv leitendes Bauteil sein. Insbesondere kann das gesteuerte selektiv leitende Bauteil so gesteuert sein, dass es dann stromleitend ist, wenn beim Abschalten der Induktivität Strom in dem Löschkreis fließen soll. Zum Beispiel kann das gesteuerte selektiv leitende Bauteil so gesteuert sein, dass es nur dann stromleitend ist, wenn der zweite Schalter geöffnet ist. Die Ansteuerung des gesteuerten selektiv leitenden Bauteils kann derart sein, dass im Betrieb nur Stromfluss in eine Richtung durch das selektiv leitende Bauteil stattfindet. Durch eine geeignete Ansteuerung kann ein von seinem Design her bidirektional leitendes Bauteil ein im Betrieb unidirektional leitendes Bauteil sein. Die Stromversorgungsschaltung kann eingerichtet sein, für das Abschalten der Induktivität den ersten Schalter und den zweiten Schalter zu Öffnen sowie das selektiv leitende Bauteil stromleitend zu machen.

Der Eingangsanschluss ist mit einer externen elektrischen Energiequelle koppelbar, und der Ausgangsanschluss ist mit der Induktivität des Aktuators des Magnetventils koppelbar. Das bedeutet, dass die Stromversorgungsschaltung als solche über Anschlüsse verfügt, die eine Verbindung mit der externen elektrischen Energiequelle einerseits und der Induktivität des Aktuators des Magnetventils andererseits ermöglichen. Bei Einbau in das Magnetventil ist die Stromversorgungsschaltung mit der Induktivität des Aktuators des Magnetventils gekoppelt. Bei Anschluss der externen elektrischen Energiequelle an das Magnetventil ist die Stromversorgungsschaltung mit der externen elektrischen Energiequelle gekoppelt. Die Induktivität des Aktuators des Magnetventils stellt eine induktive Last für die Stromversorgungsschaltung dar.

Die Ausdrucksweise, dass der Eingangsanschluss mit einer externen elektrischen Energiequelle koppelbar ist, bedeutet, dass der Eingangsanschluss mit einer oder einer Mehrzahl von externen elektrischen Energiequellen koppelbar ist. In dem Beispiel eines Kraftfahrzeugs kann der Eingangsanschluss mit einer Batterie und mit einer Lichtmaschine gekoppelt sein, wobei der Eingangsanschluss im Betrieb Energie von der Batterie und/oder der Lichtmaschine aufnehmen kann.

Gemäß einer weiteren Ausführungsform ist die Stromversorgungsschaltung eingerichtet, für das Abschalten der Induktivität den ersten Schalter und den zweiten Schalter in einem zeitlichen Abstand von höchstens 0,2 ms, insbesondere in einem zeitlichen Abstand von höchstens 0,1 ms, weiter insbesondere in einem zeitlichen Abstand von höchstens 0,05 ms, zu öffnen. Auf diese Weise können der erste Schalter und der zweite Schalter mit sehr kurzem zeitlichen Versatz geöffnet werden, so dass der erste Schalter und der zweite Schalter beim Abschalten der Induktivität möglichst lange gemeinsam geöffnet sind. Dies wiederum trägt besonders gut zu der oben beschriebenen schnellen Entladung und geringen Verlustleistung beim Abschalten der Induktivität bei.

Gemäß einer weiteren Ausführungsform ist die Stromversorgungsschaltung eingerichtet, für das Abschalten der Induktivität den zweiten Schalter vor dem ersten Schalter zu öffnen oder den ersten Schalter vor dem zweiten Schalter zu öffnen oder den ersten Schalter und den zweiten Schalter gleichzeitig zu öffnen. Das Öffnen des zweiten Schalters vor dem ersten Schalter kann zu einer besonders guten elektromagnetischen Verträglichkeit beitragen, insbesondere ungewollte Rücckopplungen in Richtung der externen elektrischen Energiequelle klein halten. Das Öffnen des ersten Schalters vor dem zweiten Schalter kann zu einem besonders direkten Ansprechverhalten der Stromversorgungsschaltung beitragen.

Gemäß einer weiteren Ausführungsform ist die Stromversorgungsschaltung eingerichtet, den zweiten Schalter nach Beendigung des Abschaltvorgangs der Induktivität zu schließen. Insbesondere kann die Stromversorgungsschaltung eingerichtet sein, den zweiten Schalter ein vorbestimmtes Zeitintervall nach dem Öffnen des zweiten Schalters zu schließen. Dabei kann das vorbestimmte Zeitintervall im Wesentlichen der Dauer des Abschaltvorgangs entsprechen oder der Dauer des Abschaltvorgangs plus einem Sicherheitsintervall entsprechen. Auf diese Weise kann die Stromversorgungsschaltung für das nächste Weiterleiten von Strom an die Induktivität des Aktuators des Magnetventils besonders gut vorbereitet sein. Lediglich durch das Schließen des ersten Schalters kann die Stromversorgung an die Induktivität wieder aufgenommen werden. Für den Fall eines gesteuerten selektiv leitenden Bauteils zwischen dem zweiten Stromversorgungspfad und dem ersten Stromversorgungspfad kann die Stromversorgungsschaltung eingerichtet sein, das gesteuerte selektiv leitende Bauteil bei Schließen des zweiten Schalters zu öffnen.

Gemäß einer weiteren Ausführungsform ist der zweite Schalter eingangsseitig von dem selektiv leitenden Bauteil in dem zweiten Stromversorgungspfad angeordnet. Auf diese Weise sind der erste Schalter und der zweite Schalter auf den ersten Stromversorgungspfad und den zweiten Stromversorgungspfad aufgeteilt. Mögliche parasitäre Schalteffekte können so gut voneinander entkoppelt werden.

Gemäß einer weiteren Ausführungsform ist das selektiv leitende Bauteil ein unidirektional leitendes Bauteil und das unidirektional leitende Bauteil weist mindestens eine Freilaufdiode auf oder besteht aus mindestens einer Freilaufdiode. Insbesondere kann das unidirektional leitende Bauteil genau eine Freilaufdiode aufweisen bzw. aus genau einer Freilaufdiode bestehen. Eine oder mehrere Freilaufdioden stellen eine wenig komplexe, aber effektive Implementierung eines unidirektional leitenden Bauteils dar. Bei Vorsehen von mehreren Freilaufdioden können diese in Reihe und/oder parallel geschaltet sein. Die Freilaufdiode / Freilaufdioden ist / sind so angeordnet, dass sie entgegengesetzt der Spannung der externen elektrischen Energiequelle orientiert sind. Somit können sie ihre Funktion als Freilaufdiode(n) in dem oben beschriebenen Löschkreis wahrnehmen, ohne auf die Stromversorgung der Induktivität bei geschlossenem ersten Schalter und geschlossenem zweiten Schalter Einfluss zu nehmen.

Gemäß einer weiteren Ausführungsform ist das selektiv leitende Bauteil ein gesteuertes selektiv leitendes Bauteil, und die Stromversorgungsschaltung ist eingerichtet, das gesteuerte selektiv leitende Bauteil stromleitend zu machen, wenn der zweite Schalter geöffnet ist. Insbesondere kann die Stromversorgungsschaltung eingerichtet sein, das gesteuerte selektiv leitende Bauteil immer dann stromleitend zu machen, wenn der zweite Schalter geöffnet ist. Auf diese Weise kann eine aufwandsarme gemeinsame Steuerung des zweiten Schalters und des gesteuerten selektiv leitenden Bauteils implementiert werden. Es ist auch möglich, zwischen dem Schalten des zweiten Schalters und des gesteuerten selektiv leitenden Bauteils Latenzen bzw. Sicherheitsintervalle vorzusehen. Durch eine aufeinander abgestimmte Steuerung des zweiten Schalters und des gesteuerten selektiv leitenden Bauteils kann mittels steuerungstechnischer Maßnahmen erreicht werden, dass die Bereitstellung des Löschkreises und die Entkopplung der Induktivität von der externen elektrischen Energiequelle aufeinander abgestimmt sind. Das gesteuerte selektiv leitende Bauteil kann ein Transistor, beispielsweise ein MOSFET-Transistor, oder ein anderes Bauteil sein, dessen Leitfähigkeit gesteuert werden kann.

Gemäß einer weiteren Ausführungsform weist der erste Schalter einen schaltbaren Hauptpfad und einen Nebenpfad auf, wobei der Nebenpfad bei Anliegen der Begrenzungsspannung / Klemmspannung leitend ist. Auf diese Weise kann eine effektive Trennung zwischen dem schaltbaren Teil des ersten Schalters und dem Teil des ersten Schalters erreicht werden, der die Stromleitung bei Anliegen der Begrenzungsspannung erreicht.

Gemäß einer weiteren Ausführungsform weist der erste Schalter eine antiparallele Diode auf, deren Durchbruchsspannung im Wesentlichen der Begrenzungsspannung entspricht. Die antiparallele Diode kann beispielsweise eine Zener-Diode sein. Das Vorsehen einer antiparallelen Diode ist eine wenig komplexe und effektive Möglichkeit, die Stromleitung bei der Begrenzungsspannung zu erreichen. Es ist auch möglich, dass die Stromleitung bei Begrenzungsspannung durch eine komplexere Schaltung, insbesondere durch einen komplexeren Nebenpfad erreicht wird. Mit so einer komplexeren Schaltung können verschiedene Ziele verfolgt werden, wie z.B. eine besonders gut eingestellte und stabile Begrenzungsspannung.

Gemäß einer weiteren Ausführungsform ist die Begrenzungsspannung zwischen 40 V und 80 V, insbesondere zwischen 60 V und 70 V. Eine solche Begrenzungsspannung hat sich als gut handhabbare Größe erwiesen, bei der aber die in der Induktivität gespeicherte Leistung schnell abgebaut werden kann.

Gemäß einer weiteren Ausführungsform bildet der erste Stromversorgungspfad im Betrieb eine Stromleitung von der externen elektrischen Energiequelle zu der Induktivität, wobei der zweite Stromversorgungspfad im Betrieb eine Stromleitung von der Induktivität zu der externen elektrischen Energiequelle bildet. Man kann auch sagen, dass die Stromversorgungsschaltung so eingerichtet ist, dass der erste Eingangspol mit einem positiven Pol der externen elektrischen Energiequelle koppelbar ist und der zweite Eingangspol mit einem negativen Pol der externen elektrischen Energiequelle koppelbar ist. Das unidirektional leitende Bauteil kann leitend von dem zweiten Stromversorgungspfad zu dem ersten Stromversorgungspfad sein und somit entgegengesetzt leitend zur Polung der externen elektrischen Energiequelle sein. Das gesteuerte selektiv leitende Bauteil kann so gesteuert sein, dass es leitend ist, wenn für den Löschkreis ein Stromfluss von dem zweiten Stromversorgungspfad zu dem ersten Stromversorgungspfad gewünscht ist.

Gemäß einer weiteren Ausführungsform ist die Stromversorgungsschaltung eingerichtet, mit einer externen elektrischen Energiequelle mit einer Versorgungsspannung von zwischen 5 V und 50 V, insbesondere von zwischen 10 V und 35 V, gekoppelt zu werden. Auf diese Weise ist die Stromversorgungsschaltung gut mit Spannungen kompatibel, wie sie oft im Bereich von Kraftfahrzeugen auftreten. Insbesondere kann die Stromversorgungsschaltung eingerichtet sein, mit einer externen elektrischen Energiequelle mit einer Versorgungsspannung von zwischen 18 V und 35 V gekoppelt zu werden, wenn die Stromversorgungsschaltung an ein 24 V Bordnetz angeschlossen werden soll. Auch kann die Stromversorgungsschaltung eingerichtet sein, mit einer externen elektrischen Energiequelle mit einer Versorgungsspannung von zwischen 10 V und 18 V gekoppelt zu werden, wenn die Stromversorgungsschaltung an ein 12 V Bordnetz angeschlossen werden soll.

Gemäß einer weiteren Ausführungsform ist die Stromversorgungsschaltung eingerichtet, eine Induktivität mit einer im Betrieb gespeicherten Energie von zwischen 50 mJ und 300 mJ, insbesondere mit einer im Betrieb gespeicherten Energie von zwischen 100 mJ und 150 mJ, mit Strom zu versorgen. Auf diese Weise ist die Stromversorgungsschaltung gut geeignet, Induktivitäten mit Strom zu versorgen, die in effektiven Aktuatoren für Magnetventile zum Einsatz kommen.

Gemäß einer weiteren Ausführungsform ist die Induktivität eine Spule eines Elektromagneten eines Magnetventils. In anderen Worten, die Stromversorgungsschaltung ist eingerichtet, eine Spule eines Elektromagneten eines Magnetventils mit Strom zu versorgen.

Gemäß einer weiteren Ausführungsform weist die Stromversorgungsschaltung weiterhin einen dritten Ausgangspol auf, wobei eine zweite Induktivität zwischen dem dritten Ausgangspol und dem zweiten Stromversorgungspfad anschließbar ist. Weiterhin weist die Stromversorgungsschaltung einen dritten Schalter auf, der zwischen dem ersten Stromversorgungspfad und dem dritten Ausgangspol angeordnet ist, wobei der dritte Schalter eine Begrenzungsspannung aufweist, bei der er unabhängig vom Öffnungszustand leitend ist. Die zweite Induktivität kann zwischen dem dritten Ausgangspol und dem zweiten Ausgangspol anschließbar sein. Es ist auch möglich, dass die zweite Induktivität zwischen dem dritten Ausgangspol und einem vierten Ausgangspol anschließbar ist, wobei der vierte Ausgangspol ausgangsseitig von dem selektiv leitenden Bauteil mit dem zweiten Stromversorgungspfad gekoppelt ist. Auf diese Weise kann die Stromversorgungsschaltung zwei Induktivitäten mit Strom versorgen, wobei beide Induktivitäten separat voneinander geschaltet werden können. Es ist insbesondere möglich, die erste Induktivität und die zweite Induktivität mit Strom zu versorgen, indem der erste Schalter, der zweite Schalter und der dritte Schalter geschlossen sind. Für das Abschalten der ersten Induktivität oder der zweiten Induktivität kann der erste Schalter bzw. der dritte Schalter zusammen mit dem zweiten Schalter geöffnet werden. Dadurch kann die in der abzuschaltenden Induktivität gespeicherte Energie in der oben beschriebenen Weise abgebaut werden. Der zweite Schalter kann dann so zeitnah wieder geschlossen werden, dass die Stromversorgung für die andere, noch mit Strom zu versorgende Induktivität im Wesentlichen unbeeinträchtigt fortgeführt wird.

Die Begrenzungsspannung, bei der der dritte Schalter unabhängig vom Öffnungszustand leitend ist, kann gleich der Begrenzungsspannung sein, bei der der erste Schalter unabhängig vom Öffnungszustand leitend ist. Die zwei Begrenzungsspannungen können aber auch voneinander verschieden sein.

Durch die genannte Anordnung sind die erste Induktivität und die zweite Induktivität parallel an die Stromversorgungsschaltung gekoppelt. Nach dem gleichen Prinzip können mehr als zwei Induktivitäten, beispielsweise drei, vier, fünf, sechs oder mehr Induktivitäten an die Stromversorgungsschaltung anschließbar sein, und die Stromversorgungsschaltung kann für die selektive Stromversorgung der einzelnen Induktivitäten eingerichtet sein.

Beispielhafte Ausführungsformen der Erfindung umfassen weiterhin eine Ventilanordnung für ein Bremssystem eines Kraftfahrzeugs, aufweisend: ein Magnetventil, aufweisend einen Elektromagneten zur Steuerung des Magnetventils; und eine Stromversorgungsschaltung gemäß einer der obigen Ausführungsformen, wobei der Elektromagnet des Magnetventils mit dem Ausgangsanschluss der Stromversorgungschaltung gekoppelt ist. In anderen Worten, der Elektromagnet des Magnetventils ist die oben beschriebene, mit dem Ausgangsanschluss der Stromversorgungsschaltung koppelbare Induktivität. Die zusätzlichen Merkmale, Modifikationen und Effekte, die oben mit Bezug auf die Stromversorgungsschaltung beschrieben worden sind, gelten für die Ventilanordnung analog.

Gemäß einer weiteren Ausführungsform weist die Ventilanordnung eine Mehrzahl von Magnetventilen auf, von denen jedes einen Elektromagneten zur Steuerung des jeweiligen Magnetventils hat und deren Elektromagneten mit dem Ausgangsanschluss der Stromversorgungsschaltung gekoppelt sind. Es ist weiterhin möglich, dass die Ventilanordnung eine erste Anzahl von Magnetventilen aufweist und eine zweite Anzahl von Stromversorgungsschaltungen gemäß den hierin beschriebenen Ausführungsformen aufweist, wobei die zweite Anzahl geringer als die erste Anzahl ist. Zum Beispiel können vier Magnetventile, insbesondere zwei redundante Einlassventile und zwei redundante Auslassventile einer Ventilanordnung, mit einer ersten Stromversorgungsschaltung gekoppelt sein, während zwei redundante Back-Up-Ventile der Ventilanordnung mit einer zweiten Stromversorgungsschaltung gekoppelt sein können.

Gemäß einer weiteren Ausführungsform ist das Magnetventil bzw. sind die Magnetventile ein Vorsteuerventil bzw. Vorsteuerventile der Ventilanordnung.

Gemäß einer weiteren Ausführungsform umfasst die Ventilanordnung weiterhin ein Relaisventil, welches von dem Magnetventil bzw. den Magnetventilen gesteuert wird.

Beispielhafte Ausführungsformen der Erfindung umfassen weiterhin ein Bremssystem für ein Kraftfahrzeug, aufweisend eine Ventilanordnung gemäß einer der obigen Ausführungsformen. Die zusätzlichen Merkmale, Modifikationen und Effekte, die oben mit Bezug auf die Stromversorgungsschaltung und/oder mit Bezug auf die Ventilanordnung beschrieben worden sind, gelten für das Bremssystem analog. Das Bremssystem kann auch mehrere der genannten Ventilanordnungen haben, z.B. eine der genannten Ventilanordnungen pro Achse des Kraftfahrzeugs.

Beispielhafte Ausführungsformen der Erfindung umfassen weiterhin ein Kraftfahrzeug, wie beispielsweise ein Personenkraftfahrzeug oder ein Nutzfahrzeug, aufweisend ein Bremssystem gemäß einer der obigen Ausführungsformen. Die zusätzlichen Merkmale, Modifikationen und Effekte, wie oben bezüglich der Stromversorgungsschaltung, bezüglich der Ventilanordnung und bezüglich des Bremssystems beschrieben, gelten für das Kraftfahrzeug analog.

Es wird betont, dass die Stromversorgungsschaltung nicht auf einen Aktuator eines Magnetventils in einem Bremssystem eines Kraftfahrzeugs beschränkt ist. Die Stromversorgungsschaltung kann auch für einen Aktuator eines Magnetventils in anderen Bereichen eingesetzt werden. Insbesondere kann die Stromversorgungsschaltung für einen Aktuator eines Magnetventils in anderen Bereichen eines Kraftfahrzeugs eingesetzt werden, beispielsweise für einen Aktuator eines Magnetventils in einem Getriebe eines Kraftfahrzeugs.

Beispielhafte Ausführungsformen der Erfindung umfassen weiterhin ein Verfahren zur Stromversorgung eines Aktuators eines Magnetventils, aufweisend: Bereitstellen von Strom von einer externen elektrischen Energiequelle an eine Induktivität des Aktuators des Magnetventils; für das Abschalten der Induktivität, Öffnen eines ersten Schalters, welcher eine Begrenzungsspannung aufweist, bei der er unabhängig vom Öffnungszustand leitend ist, und Öffnen eines zweiten Schalters; mit Hilfe des Öffnens des ersten Schalters und des zweiten Schalters, Verursachen eines Löschstroms in einem Löschkreis, welcher den ersten Schalter, die Induktivität und ein selektiv leitendes Bauteil umfasst, wobei das selektiv leitende Bauteil ein unidirektional leitendes Bauteil oder ein gesteuertes selektiv leitendes Bauteil ist; wobei das Öffnen des zweiten Schalters den Löschkreis von der externen elektrischen Energiequelle entkoppelt. Die zusätzlichen Merkmale, Modifikationen und Effekte, wie oben bezüglich der Stromversorgungsschaltung für einen Aktuator eines Magnetventils beschrieben, gelten für das Verfahren zur Stromversorgung eines Aktuators eines Magnetventils analog. Insbesondere kann das Verfahren zur Stromversorgung eines Aktuators eines Magnetventils ein Verfahren zur Stromversorgung eines Aktuators eines Magnetventils mittels der Stromversorgungsschaltung gemäß einer der obigen Ausführungsformen sein.

Weitere beispielhafte Ausführungsformen der Erfindung werden im Folgenden mit Bezug auf die beiliegenden Zeichnungen beschrieben.
Fig. 1 zeigt eine Stromversorgungsschaltung für einen Aktuator eines Magnetventils gemäß einer beispielhaften Ausführungsform der Erfindung zusammen mit einer angeschlossenen externen elektrischen Energiequelle und einer angeschlossenen Induktivität in einem Blockdiagramm;
Fig. 2 zeigt die Stromversorgungsschaltung der Fig. 1 in verschiedenen Betriebszuständen;
Fig. 3 veranschaulicht den Abschaltvorgang der an die Stromversorgungsschaltung der Fig. 1 und 2 angeschlossenen Induktivität mittels des Stromverlaufs über die Zeit;
Fig. 4 zeigt eine Stromversorgungsschaltung für einen Aktuator eines Magnetventils gemäß einer weiteren beispielhaften Ausführungsform der Erfindung zusammen mit einer angeschlossenen externen elektrischen Energiequelle und zwei angeschlossenen Induktivitäten in einem Blockdiagramm;
Fig. 5 zeigt eine Stromversorgungsschaltung für einen Aktuator eines Magnetventils gemäß einer weiteren beispielhaften Ausführungsform der Erfindung zusammen mit einer angeschlossenen externen elektrischen Energiequelle und einer angeschlossenen Induktivität in einem Blockdiagramm;
Fig. 6 zeigt eine Ventilanordnung gemäß einer beispielhaften Ausführungsform der Erfindung in einer Querschnittsansicht;
Fig. 7 zeigt ein Bremssystem gemäß einer beispielhaften Ausführungsform der Erfindung in einem Blockdiagramm; und
Fig. 8 zeigt ein Kraftfahrzeug gemäß einer beispielhaften Ausführungsform der Erfindung in einem Blockdiagramm.

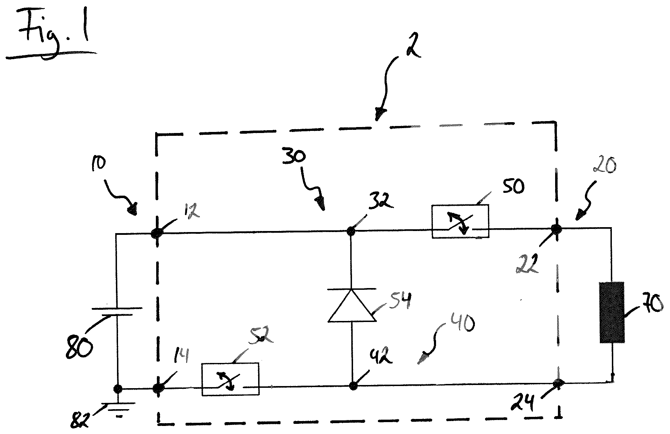

Fig. 1 zeigt eine Stromversorgungsschaltung 2 für einen Aktuator eines Magnetventils gemäß einer beispielhaften Ausführungsform der Erfindung in einem Blockdiagramm. Die Stromversorgungsschaltung 2 ist zusammen mit einer externen elektrischen Energiequelle 80 und einer Induktivität 70 gezeigt. Zur Abgrenzung bezüglich der externen elektrischen Energiequelle 80 und der Induktivität 70 ist die Stromversorgungsschaltung 2 mit einem gestrichelten Kasten versehen.

Die Stromversorgungsschaltung 2 weist einen Eingangsanschluss 10 auf. Der Eingangsanschluss 10 hat einen ersten Eingangspol 12 und einen zweiten Eingangspol 14. Der erste Eingangspol 12 ist mit dem positiven Potential der externen elektrischen Energiequelle 80 gekoppelt, und der zweite Eingangspol 14 ist mit dem negativen Potential der externen elektrischen Energiequelle 80 gekoppelt. Das negative Potential der externen elektrischen Energiequelle 80 und der zweite Eingangspol 14 sind mit einem Masseanschluss 82 verbunden. Die externe elektrische Energiequelle 80 kann eine Batterie, wie beispielsweise eine Kraftfahrzeug-Batterie, sein oder eine Lichtmaschine oder eine Kombination einer Batterie und einer Lichtmaschine oder jegliche andere geeignete externe elektrische Energiequelle. Das Wort extern bezieht sich dabei auf die Anordnung außerhalb der Stromversorgungsschaltung 2. Die Stromversorgungsschaltung 2 und die externe elektrische Energiequelle können natürlich Teil des gleichen technischen Systems sein.

Die Stromversorgungsschaltung 2 weist weiterhin einen Ausgangsanschluss 20 auf. Der Ausgangsanschluss 20 hat einen ersten Ausgangspol 22 und einen zweiten Ausgangspol 24. Die Induktivität 70 ist an den Ausgangsanschluss 20 angeschlossen, wobei ein Ende der Induktivität 70 an den ersten Ausgangspol 22 und das andere Ende der Induktivität 70 an den zweiten Ausgangspol 24 angeschlossen sind. Die Induktivität ist Teil eines Aktuators eines Magnetventils. Sie kann beispielsweise die Spule eines Elektromagneten eines Aktuators eines Magnetventils sein.

Die Stromversorgungsschaltung 2 ist dazu eingerichtet, die Induktivität 70 mit Strom zu versorgen. Dafür leitet die Stromversorgungsschaltung 2 Strom, der an dem Eingangsanschluss 10 von der externen elektrischen Energiequelle 80 aufgenommen wird, an die Induktivität 70 über den Ausgangsanschluss 20 weiter. Der innere Aufbau der Stromversorgungsschaltung 2 wird im Folgenden beschrieben.

Die Stromversorgungsschaltung 2 weist einen ersten Stromversorgungspfad 30 auf, der den ersten Eingangspol 12 mit dem ersten Ausgangspol 22 verbindet. Ferner weist die Stromversorgungsschaltung 2 einen zweiten Stromversorgungspfad 40 auf, der den zweiten Eingangspol 14 mit dem zweiten Ausgangspol 24 verbindet. In dem ersten Stromversorgungspfad 30 ist ein erster Schalter 50 angeordnet. In dem zweiten Stromversorgungspfad 40 ist ein zweiter Schalter 52 angeordnet.

Weiterhin weist die Stromversorgungsschaltung 2 ein unidirektional leitendes Bauteil 54 auf. Das unidirektional leitende Bauteil 54 ist in der beispielhaften Ausführungsform der Fig. 1 eine Diode. Die Diode 54 ist zwischen einem ersten Knoten 32, der in dem ersten Stromversorgungspfad 30 ist, und einem zweiten Knoten 42, der in dem zweiten Stromversorgungspfad 40 ist, angeordnet. Die Durchlassrichtung der Diode ist von dem zweiten Stromversorgungspfad 40, insbesondere von dem zweiten Knoten 42, zu dem ersten Stromversorgungspfad 30, insbesondere zu dem ersten Knoten 32. Die Diode 54 ist eine beispielhafte Ausführungsform eines selektiv leitenden Bauteils, da sie Stromfluss nur in eine Richtung erlaubt; zumindest bei den Spannungen, die beim gewöhnlichen Betrieb der Stromversorgungsschaltung auftreten.

Der erste Schalter 50 ist zwischen dem ersten Knoten 32 und dem zweiten Ausgangspol 22 angeordnet, d.h. ausgangsseitig von der Diode 54 in dem ersten Stromversorgungspfad 30 angeordnet. Der zweite Schalter 52 ist zwischen dem zweiten Knoten 42 und dem zweiten Eingangspol 14 angeordnet, d. h. eingangsseitig von der Diode 54 in dem zweiten Stromversorgungspfad 40 angeordnet. In der beispielhaften Ausführungsform der Fig. 1 ist der erste Knoten 32 direkt mit dem ersten Eingangspol 12 und der zweite Knoten 42 direkt mit dem zweiten Ausgangspol 24 verbunden. Es können noch weitere Bauteile in der Stromversorgungsschaltung 2 vorhanden sein. Aus Übersichtlichkeitsgründen konzentriert sich Fig. 1 auf die im Rahmen der vorliegenden Erfindung bedeutendsten Komponenten.

Der erste Schalter 50 weist eine Begrenzungsspannung auf, bei der er unabhängig vom Öffnungszustand leitend ist. Wenn der erste Schalter geschlossen ist, ist er leitend, und es gibt keinen Spannungsabfall bzw. im Wesentlichen keinen Spannungsabfall über dem ersten Schalter 50. Wenn der erste Schalter 50 geöffnet ist, ist er bei Anliegen der Begrenzungsspannung immer noch leitend. Das Öffnen des ersten Schalters 50 kann somit so verstanden werden, dass ein Hauptpfad geöffnet wird, aber ein Nebenpfad weiterhin leitend sein kann, abhängig von der über dem Schalter 50 abfallenden Spannung. Weiterhin kann man sich den Nebenpfad so vorstellen, dass ein erzwungener Stromfluss durch den Nebenpfad fließen kann, der Nebenpfad aber dafür sorgt, dass der Spannungsabfall über dem Schalter 50 der Begrenzungsspannung entspricht.

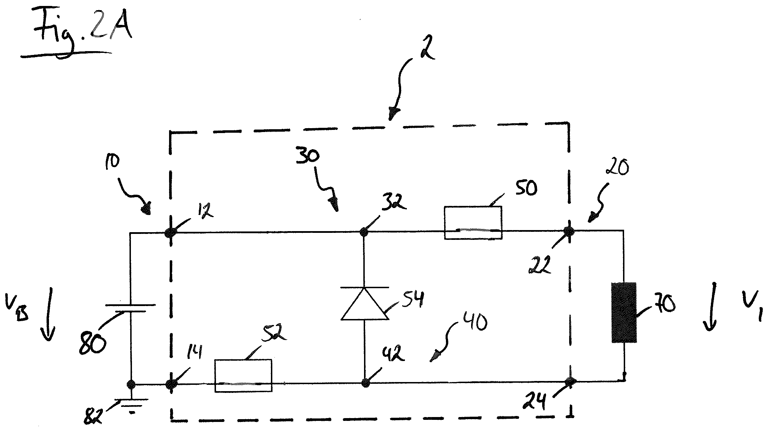

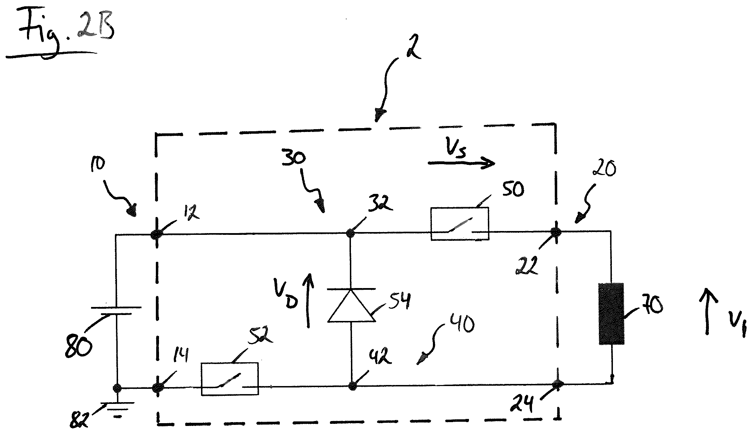

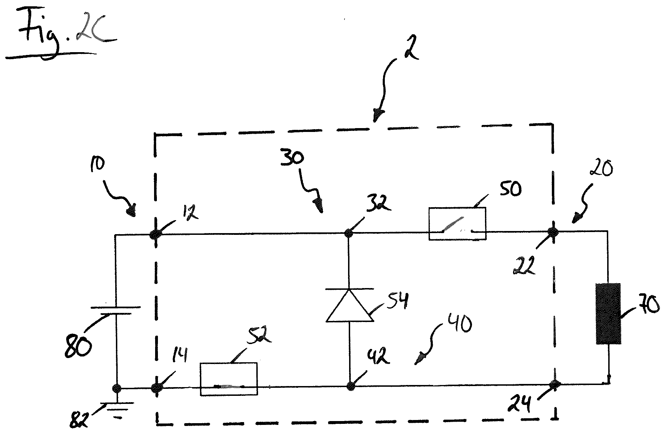

Fig. 2 zeigt die Stromversorgungsschaltung 2 der Fig. 1 in verschiedenen Betriebszuständen. Anhand dieser verschiedenen Betriebszustände wird das Verhalten der Stromversorgungsschaltung 2 beschrieben.

Fig. 2A zeigt die Stromversorgungsschaltung 2 in einem Betriebszustand, in dem der erste Schalter 50 und der zweite Schalter 52 geschlossen sind. Dieser Betriebszustand entspricht der Stromversorgung der Induktivität 70 mit Strom von der externen elektrischen Energiequelle 80. Der erste Stromversorgungspfad 30 und der zweite Stromversorgungspfad 40 sind leitend. Die Induktivität 70 ist stromdurchflossen und kann als angeschaltet bezeichnet werden. Wenn die Induktivität 70 eine Spule eines Elektromagneten eines Magnetventils ist, wie oben beschrieben, kann der Elektromagnet so eine Kraft auf ein magnetisches Bauteil, wie z. B. auf einen beweglichen Magnetkern, ausüben und das Magnetventil in gewünschter Weise ansteuern.

In der beispielhaften Ausführungsform der Fig. 2 ist die Spannung der externen elektrischen Energiequelle 80, auch als Batterie-Spannung V_{B} bezeichnet, 25 V. Bei geschlossenem ersten Schalter 50 und geschlossenem zweiten Schalter 52 ist auch die Spannung über die Induktivität 70, hierin auch als V_{I} bezeichnet, 25 V.

Fig. 2B zeigt den Betriebszustand der Stromversorgungsschaltung 2 für das Abschalten der Induktivität 70. Für das Abschalten der Induktivität 70 werden der erste Schalter 50 und der zweite Schalter 52 geöffnet. Insbesondere können der erste Schalter 50 und der zweite Schalter 52 gleichzeitig bzw. im Wesentlichen gleichzeitig bzw. in enger zeitlicher Abfolge geöffnet werden. Das Öffnen des ersten Schalters 50 und des zweiten Schalters 52 findet zum Zeitpunkt t0 statt.

Durch das Öffnen des ersten Schalters 50 und des zweiten Schalters 52 ist die Induktivität 70 von der externen elektrischen Energiequelle 80 entkoppelt. Es ergibt sich ein Löschkreis, bestehend aus der Induktivität 70, der Diode 54 und dem ersten Schalter 50. In diesem Löschkreis wird die in der Induktivität 70 gespeicherte elektrische Energie abgebaut. Der Abbau der elektrischen Energie wird im Folgenden beschrieben.

Auch nach Öffnen des ersten Schalters 50 und des zweiten Schalters 52 fließt weiterhin Strom durch die Induktivität 70. In anderen Worten, die Induktivität 70 treibt aufgrund ihrer inhärenten Eigenschaften den Strom weiter durch den Löschkreis. Demzufolge ergibt sich ein Stromflusspfad von dem ersten Ausgangspol 22 durch die Induktivität 70, über den zweiten Ausgangspol 24 und den zweiten Knoten 42 durch die Diode 54, und über den ersten Knoten 32 durch den ersten Schalter 50 zu dem ersten Ausgangspol 22. Dieser erzwungene Stromfluss führt dazu, dass an dem ersten Schalter 50 die Begrenzungsspannung abfällt. Die Begrenzungsspannung wird hierin auch als Schalter-Spannung V_{S} bezeichnet. In der beispielhaften Ausführungsform ist die Begrenzungsspannung 65 V. Außerdem fällt an der Diode 54 ihre Vorwärtsspannung von 0,7 V, hierin auch als Diodenspannung V_{D} bezeichnet, ab. Aufgrund des durch die Induktivität 70 erzwungenen Stroms, der festgelegten Diodenspannung V_{D} und der festgelegten Begrenzungsspannung V_{S} springt die an der Induktivität anliegende Spannung V_{I} auf 65,7 V. Diese ist von dem zweiten Ausgangspol 24 zu dem ersten Ausgangspol 22 hin gerichtet. In dem Löschkreis ergibt sich ein stetig abfallender Stromfluss, wobei durch den Strom und die über dem ersten Schalter 50 konstante Begrenzungsspannung die in der Induktivität 70 gespeicherte Energie in dem ersten Schalter 50 und, zu einem geringen Teil, in der Diode 54 abgebaut wird.

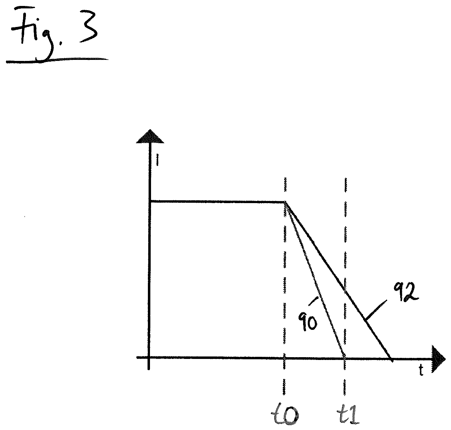

Fig. 3 veranschaulicht den stetig abnehmenden Strom in dem Löschkreis, bestehend aus Induktivität 70, Diode 54 und erstem Schalter 50, während des Abschaltens der Induktivität 70. Der Stromverlauf 90 der Fig. 3 illustriert den stetig abfallenden Strom im Löschkreis zwischen dem Zeitpunkt t0, in dem der erste Schalter 50 und der zweite Schalter 52 geöffnet werden, und dem Zeitpunkt t1, in dem die anfangs in der Induktivität 70 gespeicherte elektrische Energie abgebaut ist. Fig. 3 zeigt weiterhin einen Vergleichs-Stromverlauf 92, der den hypothetischen Fall eines im Abschaltvorgang geschlossenen zweiten Schalters 52 bzw. einer Stromversorgungsschaltung ohne zweiten Schalter 52 zeigt. Durch den Vergleich des Stromverlaufs 90 mit dem Vergleichs-Stromverlauf 92 wird klar, dass der Abschaltvorgang kürzer dauert, der Strom im Löschkreis schneller abnimmt und eine insgesamt kleinere Verlustenergie anfällt. Dies ist unter anderem darauf zurückzuführen, dass durch das Öffnen des zweiten Schalters 52 die externe elektrische Energiequelle 80 davon abgehalten wird, auch beim Abschalten der Induktivität 70 Strom in den Löschkreis zu speisen und so das Abschalten zu verzögern.

Fig. 2C zeigt einen weiteren Betriebszustand der Stromversorgungsschaltung 2. Insbesondere zeigt Fig. 2C den Betriebszustand der Stromversorgungsschaltung 2 nach dem Zeitpunkt t1, an dem die zuvor in der Induktivität 70 gespeicherte elektrische Energie vollständig abgebaut ist. Nach dem Ende des Abschaltvorgangs wird der zweite Schalter 52 geschlossen, und der erste Schalter 50 bleibt geöffnet. Auf diese Weise ist die Induktivität 70 weiterhin von der externen elektrischen Energiequelle 80 entkoppelt, und es findet kein Stromfluss statt. Ein gewünschter Stromfluss zu der Induktivität 70 kann in der Folge allerdings sehr schnell und ohne große Komplexität durch ein Schließen des ersten Schalters 50 bewirkt werden.

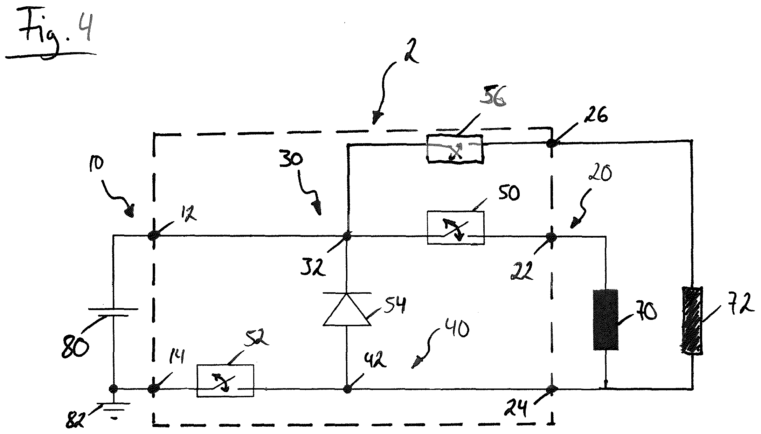

Fig. 4 zeigt eine Stromversorgungsschaltung 2 für einen Aktuator eines Magnetventils gemäß einer weiteren beispielhaften Ausführungsform der Erfindung in einem Blockdiagramm. Die Stromversorgungsschaltung 2 ist zusammen mit einer externen elektrischen Energiequelle 80 und einer ersten Induktivität 70 und einer zweiten Induktivität 72 gezeigt. Die Stromversorgungsschaltung 2 der Fig. 4 ist eine Abwandlung der Stromversorgungsschaltung 2 der Fig. 1. Korrespondierende Elemente sind mit den gleichen Bezugszeichen versehen, und es wird auf die obige Beschreibung mit Bezug auf Fig. 1 bis 3 verwiesen.

Zusätzlich zu den Elementen der Stromversorgungsschaltung 2 der Fig. 1 weist die Stromversorgungsschaltung 2 der Fig. 4 einen dritten Ausgangspol 26 auf. Der dritte Ausgangspol 26 ist mit ersten Knoten 32 über einen dritten Schalter 56 verbunden. Der dritte Schalter 56 weist eine Begrenzungsspannung auf, bei der er unabhängig von seinem Öffnungszustand leitend ist. In der beispielhaften Ausführungsform der Fig. 4 hat der dritte Schalter 56 das gleiche Design wie der erste Schalter 50, d. h. insbesondere die gleiche Begrenzungsspannung wie der erste Schalter 50.

Die zweite Induktivität 72 ist an die Stromversorgungsschaltung 2 angeschlossen. Insbesondere ist die zweite Induktivität 72 mit ihrem einen Ende an den dritten Ausgangspol 26 und mit ihrem anderen Ende an den zweiten Ausgangspol 24 angeschlossen. Der erste Schalter 50 und die erste Induktivität 70 einerseits und der dritte Schalter 56 und die zweite Induktivität 72 andererseits bilden parallele Pfade zwischen dem ersten Knoten 32 und dem zweiten Ausgangsanschluss 24. Durch entsprechende Steuerung des ersten Schalters 50 und des dritten Schalters 56 können die erste Induktivität 70 und die zweite Induktivität 72 selektiv mit Strom versorgt werden. Zu einem beliebigen Zeitpunkt kann die Stromversorgungsschaltung 2 beide Induktivitäten 70, 72 oder eine der beiden Induktivitäten 70, 72 oder keine der beiden Induktivitäten 70, 72 mit Strom versorgen.

Das Abschalten der zweiten Induktivität 72 kann, analog zu dem oben beschriebenen Abschalten der ersten Induktivität 70, durch Öffnen des dritten Schalters 56 und des zweiten Schalters 52 erfolgen. Es wird betont, dass es möglich ist, eine der zwei Induktivitäten 70, 72 einzeln durch Öffnen des ersten Schalters 50 bzw. des dritten Schalters 56 und des zweiten Schalters 52 abzuschalten, ohne die andere der zwei Induktivitäten 70, 72 abzuschalten. Über die Begrenzungsspannungen des ersten Schalters 50 und des dritten Schalters 56 kann der Abschaltvorgang zeitlich so dimensioniert werden, dass ein zeitweises Öffnen des zweiten Schalters 52 zwar kurzzeitig die Stromversorgungsschaltung 2 von der externen elektrischen Energiequelle 80 entkoppelt, der Abschaltvorgang der einen Induktivität aber vorbei ist, bevor der Strom in der anderen der zwei Induktivitäten 70, 72 einbricht.

Die zweite Induktivität 72 kann Teil desselben technischen Systems sein wie die ersten Induktivität 70. Beispielsweise kann die zweite Induktivität eine Spule eines zweiten Elektromagneten eines zweiten Magnetventils sein, wobei die beiden Magnetventile Teil einer gemeinsamen Ventilanordnung sind.

Die Stromversorgungsschaltung 2 kann auch für die Stromversorgung von drei oder mehr Induktivitäten erweitert werden. Es können beispielsweise weitere Pfade zwischen dem ersten Knoten 32 und dem zweiten Ausgangsanschluss 24 vorgesehen sein.

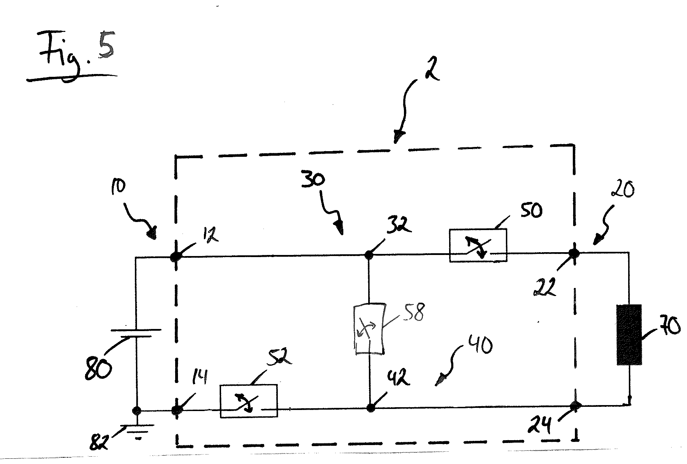

Fig. 5 zeigt eine Stromversorgungsschaltung 2 für einen Aktuator eines Magnetventils gemäß einer weiteren beispielhaften Ausführungsform der Erfindung in einem Blockdiagramm. Die Stromversorgungsschaltung 2 ist zusammen mit einer externen elektrischen Energiequelle 80 und einer Induktivität 70 gezeigt. Die Stromversorgungsschaltung 2 der Fig. 5 ist eine Abwandlung der Stromversorgungsschaltung 2 der Fig. 1. Korrespondierende Elemente sind mit den gleichen Bezugszeichen versehen, und es wird auf die obige Beschreibung mit Bezug auf Fig. 1 bis 3 verwiesen.

Statt der Diode 54 der Stromversorgungsschaltung 2 der Fig. 1 hat die Stromversorgungsschaltung 2 der Fig. 5 ein gesteuertes selektiv leitendes Bauteil 58. Das gesteuerte selektiv leitende Bauteil kann ein Löschkreis-Schalter 58 sein, welcher beispielsweise ein MOSFET-Schalter sein kann. In der beispielhaften Ausführungsform der Fig. 5 sind der zweite Schalter 52 und der Löschkreis-Schalter 58 derart gemeinsam gesteuert, dass der Löschkreis-Schalter 58 bei geöffnetem zweiten Schalter geschlossen ist und umgekehrt. Auf diese Weise ist sichergestellt, dass beim Abschalten der Induktivität 70, d. h. bei geöffnetem ersten Schalter 50 und geöffnetem zweiten Schalter 52, der Löschkreis-Schalter 58 geschlossen ist und der Löschstrom durch die Induktivität 70, den Löschkreis-Schalter 58 und den ersten Schalter 50 fließen kann. Weiterhin ist sichergestellt, dass bei geschlossenem zweiten Schalter 52 kein Kurzschluss zwischen dem ersten Stromversorgungspfad 30 und dem zweiten Stromversorgungspfad 40 vorliegen kann. Andere Arten der Ansteuerung des gesteuerten selektiv leitenden Bauteils 58 sind auch möglich.

Die Stromversorgungsschaltung 2 der Fig. 5 kann analog zu Fig. 4 auf eine Mehrzahl von angeschlossenen Induktivitäten erweitert werden.

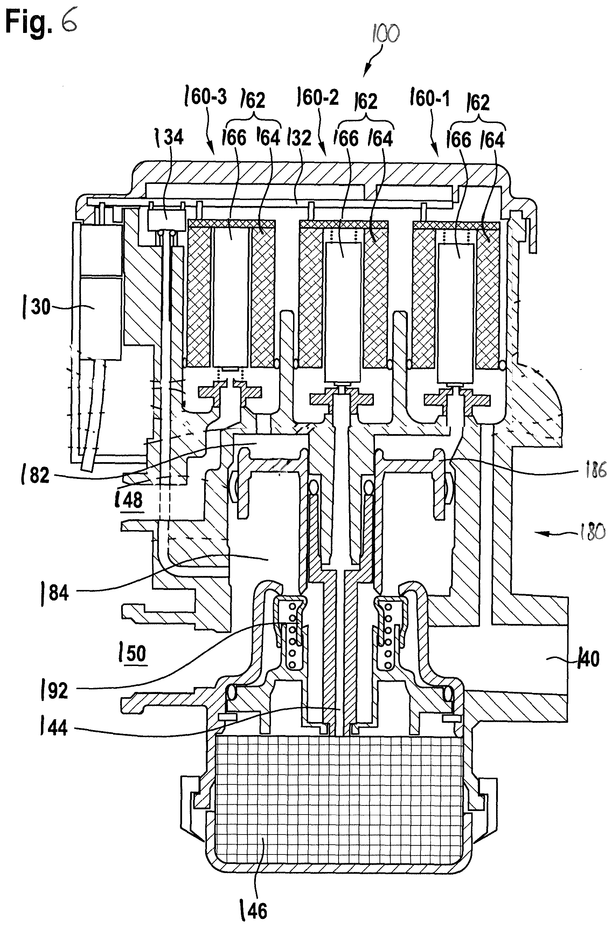

Fig. 6 zeigt eine Ventilanordnung 100 gemäß einer beispielhaften Ausführungsform der Erfindung in einer Längsschnittdarstellung. Die Ventilanordnung 100 umfasst drei Magnetventile, nämlich ein erstes Magnetventil 160-1, ein zweites Magnetventil 160-2 und ein drittes Magnetventil 160-3. Jedes der Magnetventile weist einen elektromagnetischen Aktuator 162 auf, welcher eine Spule 164 und einen beweglichen Magnetkern 166 aufweist. Durch Anlegen von Strom an die Spule 164 bzw. durch Abschalten des Stromflusses durch die Spule 164 kann der Magnetkern 166 bewegt werden. Durch das Bewegen der Magnetkerne 166 können pneumatische Verbindungen hergestellt bzw. getrennt werden.

Mittels der Magnetventile 160-1, 160-2 und 160-3 kann der Druck in einer Steuerkammer 182 eines Relaisventils 180 gesteuert werden kann. Das erste Magnetventil 160-1 kann selektiv eine Verbindung zwischen einem Druckluftvorrat 140 und der Steuerkammer 182 schaffen, wodurch der Druck in der Steuerkammer 182 erhöht werden kann. Das erste Magnetventil 160-1 kann als Einlassventil bezeichnet werden. Das zweite Magnetventil 160-2 kann selektiv eine Verbindung zwischen einer Entlüftung 144 und der Steuerkammer 182 schaffen, wodurch der Druck in der Steuerkammer 182 reduziert werden kann. Das zweite Magnetventil 160-2 kann als Auslassventil bezeichnet werden. Das dritte Magnetventil 160-3 verbindet standardmäßig die Steuerkammer 182 mit einem pneumatischen Back-Up-Steuereingang 148, über den bei Ausfall des ersten Magnetventils 160-1 und/oder des zweiten Magnetventils 160-2 der Druck in der Steuerkammer 182 eingestellt werden kann. Das dritte Magnetventil 160-3 kann als Back-Up-Ventil bezeichnet werden.

Das Relaisventil 180 weist neben der Steuerkammer 182 eine Arbeitskammer 184 auf, zwischen denen ein Relaiskolben 186 angeordnet ist. Über die Bewegung einer vorgespannten Manschette 192 kann der Relaiskolben 186 die Arbeitskammer 184 selektiv mit dem Druckluftvorrat 140 oder der Entlüftung 144 verbinden und so den Druck in der Arbeitskammer dem Druck in der Steuerkammer nachführen. Somit kann die Ventilanordnung 100 an einem Bremsdruckanschluss 150 einen gewünschten Bremsdruck bereitstellen. In der Zeichenebene von Fig. 6 entsteht bei einer Verschiebung der Manschette 192 nach unten eine Verbindung zwischen der Arbeitskammer 184 und dem Druckluftvorrat 140. Bei einer Verschiebung der Manschette 192 nach oben entsteht eine Verbindung zwischen der Arbeitskammer 184 und der Entlüftung 144. Die Entlüftung 144 endet in einem Schalldämpfer 146, durch welchen Luft in die Umgebung der Ventilanordnung 100 abgelassen wird.

Die Ventilanordnung 100 weist weiterhin eine Ventilsteuerung 132 auf. Die Ventilsteuerung 132 empfängt Sensorsignale von einem Drucksensor 134, welcher mit der Arbeitskammer 184 verbunden ist. Die Ventilsteuerung 132 empfängt weiterhin den gewünschten Bremsdruck von einer externen Instanz, wie bspw. von einer Steuereinheit des Bremssystems, über einen Stecker 130. Auf Basis dieser Eingangsgrößen steuert die Ventilsteuerung 132 das erste Magnetventil 160-1, das zweite Magnetventil 160-2 und ggf. das dritte Magnetventil 160-3 und regelt den Druck in der Arbeitskammer 184 auf den gewünschten Bremsdruck ein.

In der beispielhaften Ausführungsform der Fig. 6 umfasst die Ventilsteuerung 132 mindestens eine Stromversorgungsschaltung gemäß einer beispielhaften Ausführungsform der Erfindung. Die Ventilsteuerung 132 kann beispielsweise drei Stromversorgungsschaltungen gemäß Fig. 1 oder Fig. 5 umfassen, von denen jeweils eine an eine jeweilige Spule 164 der Magnetventile 160-1, 160-2 und 160-3 angeschlossen ist. Die Spule 164 stellt die an die Stromversorgungsschaltung gekoppelte Induktivität dar. In einem anderen Beispiel kann die Ventilsteuerung 132 eine Stromversorgungsschaltung gemäß einer beispielhaften Ausführungsform der Erfindung umfassen, welche nach dem Prinzip der Fig. 4 auf drei gekoppelte Induktivitäten erweitert ist. Die einen oder mehreren Stromversorgungsschaltungen können beispielsweise über den Stecker 130 mit einer externen elektrischen Energiequelle gekoppelt sein.

Es ist weiterhin möglich, dass die Ventilanordnung 100 redundant ausgelegt ist und zwei Einlassventile, zwei Auslassventile und zwei Back-Up-Ventile aufweist. Es ist z.B. möglich, dass die zwei Einlassventile und die zwei Auslassventile nach dem Prinzip der Fig. 4 an eine gemeines Stromversorgungsschaltung gekoppelt sind. Die zwei Back-Up-Ventile können nach dem Prinzip der Fig. 4 an eine zweite Stromversorgungsschaltung gekoppelt sein. Es ist auch möglich, dass alle sechs Ventile an eine einzige Stromversorgungsschaltung gekoppelt sind.

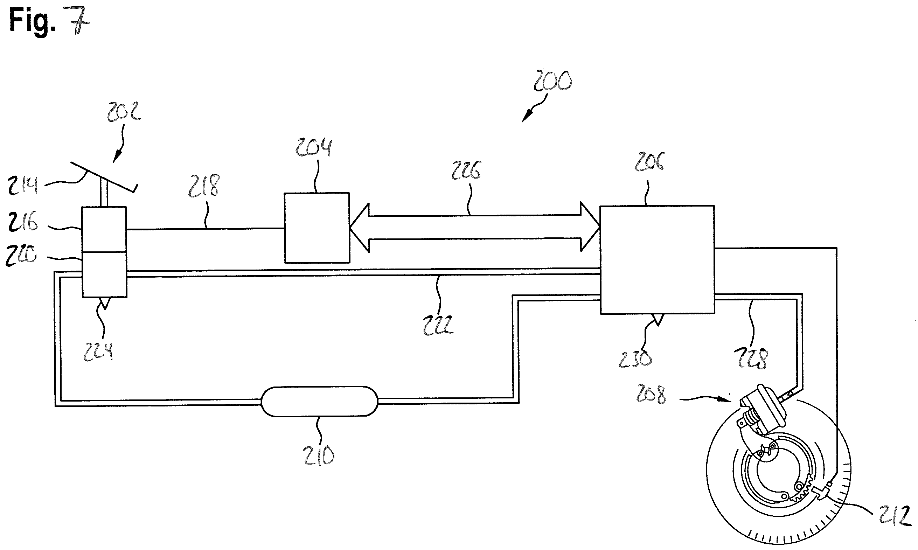

Fig. 7 zeigt ein Bremssystem 200 gemäß einer beispielhaften Ausführungsform der Erfindung in einem Blockdiagramm. Das Bremssystem 200 weist einen Verzögerungsgeber 202, eine Steuereinheit 204, eine Ventilanordnung 206, eine Bremseinrichtung 208 und einen Druckluft-Vorrat 210 auf. Weiterhin weist das Bremssystem 200 Drehzahl- und Belagverschleißsensoren 212 auf.

Der Verzögerungsgeber 202 weist ein Bremspedal 214 auf. Das Bremspedal 214 ist mit einem elektrischen Sensor 216 verbunden, der die Stellung des Bremspedals 214 detektiert und über eine elektrische Signalleitung 218 an die Steuereinheit 204 übermittelt. Weiterhin ist das Bremspedal 214 mit einem pneumatischen Sensor 220 verbunden. Der pneumatische Sensor 220 ist über eine Druckluftleitung 222 mit der Ventilanordnung 206 verbunden. Weiterhin ist der pneumatische Sensor 220 mit dem Druckluft-Vorrat 210 verbunden. Außerdem hat der pneumatische Sensor 220 einen Auslassanschluss 224 zur Atmosphäre, über den der Druck in dem pneumatischen Sensor 220 abgelassen werden kann. Der pneumatische Sensor 220 ist eingerichtet, auf Basis der Stellung des Bremspedals 214 einen entsprechenden Steuerdruck für die Ventilanordnung 206 auf der Druckluftleitung 222 bereitzustellen.

Wie oben ausgeführt, verbindet die elektrische Signalleitung 218 den elektrischen Sensor 216 und die Steuereinheit 204. Die Steuereinheit 204 ist weiterhin mit der Ventilanordnung 206 über einen CAN-Bus 226 verbunden. Die Steuereinheit 204 ist eingerichtet, auf Basis der Stellung des Bremspedals 214, wie von dem elektrischen Sensor 216 detektiert, einen gewünschten Bremsdruck zu berechnen und diesen gewünschten Bremsdruck über den CAN-Bus 226 an die Ventilanordnung 206 zu kommunizieren.

Die Ventilanordnung 206 ist eingerichtet, den gewünschten Bremsdruck elektrisch über den CAN-Bus 226 zu empfangen und pneumatisch über die Druckluftleitung 222 zu empfangen. Die Ventilanordnung 206 ist weiterhin eingerichtet, den gewünschten Bremsdruck an die Bremseinrichtung 208 über eine Druckluftleitung 228 anzulegen. Die Ventilanordnung 206 kann der Ventilanordnung 100 der Fig. 6 entsprechen.

Die Ventilanordnung 206 ist über die Druckluftleitung 222 mit dem pneumatischen Sensor 220 verbunden, ist mit dem Druckluft-Vorrat 210 verbunden, ist mit der Bremseinrichtung 208 über die Druckluftleitung 228 verbunden und ist mit den Drehzahl- und Belagverschleißsensoren 212 über eine elektrische Signalleitung verbunden. Weiterhin hat die Ventilanordnung 206 einen Auslassanschluss 230 zur Atmosphäre.

Die Bremseinrichtung 208 ist schematisch als Einheit in dem Blockdiagramm von Fig. 7 dargestellt. Der Begriff Bremseinrichtung beinhaltet jegliche Art von Bremseinrichtung, die geeignet ist, mittels eines angelegten Bremsdrucks eine Bremswirkung auf ein Rad bzw. auf sich mit einem Rad drehende Elemente eines Fahrzeugs auszuüben.

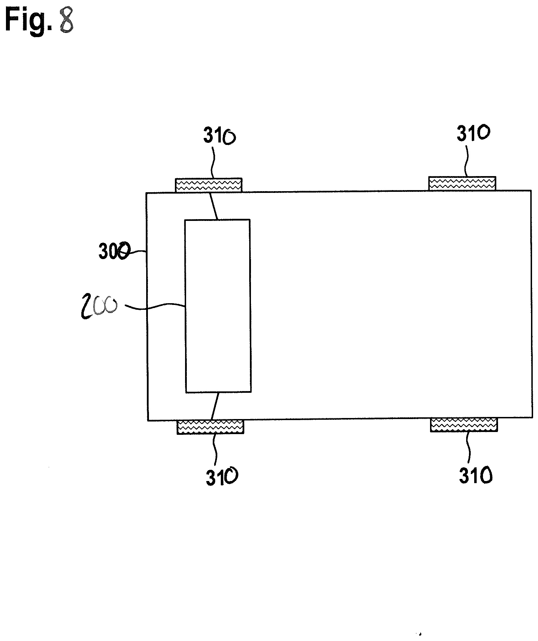

Fig. 8 zeigt ein Kraftfahrzeug 300 gemäß einer beispielhaften Ausführungsform der Erfindung, das mit dem Bremssystem 200 gemäß einer beispielhaften Ausführungsform ausgestattet ist, in einem Blockdiagramm. Im vorliegenden Beispiel hat das Fahrzeug 300 vier Räder 310, wobei eine größere Anzahl von Rädern möglich ist. Das Bremssystem 200 steuert die Bremswirkung auf zwei der vier Räder 310. Es ist auch möglich, dass das Bremssystem mit mehr als zwei Rädern verbunden ist und/oder mehrere Ventilanordnungen in dem Bremssystem vorhanden sind, die den gewünschten Bremsdruck an die Bremseinrichtung von jeweils zwei oder mehr Rädern anlegen.

### Bezugszeichenliste

- 2: Stromversorgungsschaltung
- 10: Eingangsanschluss
- 12: erster Eingangspol
- 14: zweiter Eingangspol
- 20: Ausgangsanschluss
- 22: erster Ausgangspol
- 24: zweiter Ausgangspol
- 26: dritter Ausgangspol
- 30: erster Stromversorgungspfad
- 32: erster Knoten
- 40: zweiter Stromversorgungspfad
- 42: zweiter Knoten
- 50: erster Schalter
- 52: zweiter Schalter
- 54: unidirektional leitendes Bauteil
- 56: dritter Schalter
- 58: gesteuertes selektiv leitendes Bauteil
- 70: Induktivität
- 72: zweite Induktivität
- 80: externe elektrische Energiequelle
- 82: Masseanschluss
- 90: Stromverlauf
- 92: Vergleichs-Stromverlauf
- 100: Ventilanordnung
- 130: Stecker
- 132: Ventilsteuerung
- 134: Drucksensor
- 140: Druckluftvorrat
- 144: Entlüftung
- 146: Schalldämpfer
- 148: Back-Up-Steuereingang
- 150: Bremsdruckanschluss
- 160-1: erstes Magnetventil
- 160-2: zweites Magnetventil
- 160-3: drittes Magnetventil
- 162: elektromagnetischer Aktuator
- 164: Spule
- 166: Magnetkern
- 180: Relaisventil
- 182: Steuerkammer
- 184: Arbeitskammer
- 186: Relaiskolben
- 192: Manschette
- 200: Bremssystem
- 202: Verzögerungsgeber
- 204: Steuereinheit
- 206: Ventilanordnung
- 208: Bremseinrichtung
- 210: Druckluft-Vorrat
- 212: Drehzahl- und Belagverschleißsensoren
- 214: Bremspedal
- 216: elektrischer Sensor
- 218: elektrische Signalleitung
- 220: pneumatischer Sensor
- 222: Druckluftleitung
- 224: Auslassanschluss
- 226: CAN-Bus
- 228: Druckluftleitung
- 230: Auslassanschluss
- 300: Kraftfahrzeug
- 310: Rad

## Patentansprüche

1. Stromversorgungsschaltung (2) für einen Aktuator eines Magnetventils, aufweisend:
einen Eingangsanschluss (10) mit einem ersten Eingangspol (12) und einem zweiten Eingangspol (14), wobei der Eingangsanschluss (10) mit einer externen elektrischen Energiequelle (80) koppelbar ist;
einen Ausgangsanschluss (20) mit einem ersten Ausgangspol (22) und einem zweiten Ausgangspol (24), wobei der Ausgangsanschluss (20) mit einer Induktivität (70) des Aktuators des Magnetventils koppelbar ist;
einen ersten Stromversorgungspfad (30), der den ersten Eingangspol (12) mit dem ersten Ausgangspol (22) verbindet;
einen zweiten Stromversorgungspfad (40), der den zweiten Eingangspol (14) mit dem zweiten Ausgangspol (24) verbindet;
ein selektiv leitendes Bauteil, das zwischen dem zweiten Stromversorgungspfad (40) und dem ersten Stromversorgungspfad (30) gekoppelt ist, wobei das selektiv leitende Bauteil ein unidirektional leitendes Bauteil (54) oder ein gesteuertes selektiv leitendes Bauteil (58) ist;
einen ersten Schalter (50), der ausgangsseitig von dem selektiv leitenden Bauteil in dem ersten Stromversorgungspfad (30) angeordnet ist, wobei der erste Schalter (50) eine Begrenzungsspannung aufweist, bei der er unabhängig vom Öffnungszustand leitend ist; und
einen zweiten Schalter (52), der eingangsseitig von dem selektiv leitenden Bauteil in dem ersten Stromversorgungspfad (30) oder dem zweiten Stromversorgungspfad (40) angeordnet ist;
wobei die Stromversorgungsschaltung (2) eingerichtet ist, für das Abschalten der Induktivität (70) den ersten Schalter (50) und den zweiten Schalter (52) zu öffnen und einen Löschkreis bereitzustellen, welcher den ersten Schalter (52), die Induktivität (70) und das selektiv leitende Bauteil umfasst.

2. Stromversorgungsschaltung (2) nach Anspruch 1, wobei die Stromversorgungsschaltung (2) eingerichtet ist, für das Abschalten der Induktivität (70) den ersten Schalter (50) und den zweiten Schalter (52) in einem zeitlichen Abstand von höchstens 0,2 ms, insbesondere in einem zeitlichen Abstand von höchstens 0,1 ms, weiter insbesondere in einem zeitlichen Abstand von höchstens 0,05 ms, zu öffnen.

3. Stromversorgungsschaltung (2) nach Anspruch 1 oder 2,
wobei die Stromversorgungsschaltung (2) eingerichtet ist, für das Abschalten der Induktivität (70) den zweiten Schalter (52) vor dem ersten Schalter (50) zu öffnen,
oder
wobei die Stromversorgungsschaltung (70) eingerichtet ist, für das Abschalten der Induktivität (70) den ersten Schalter (50) vor dem zweiten Schalter (52) zu öffnen,
oder
wobei die Stromversorgungsschaltung (70) eingerichtet ist, für das Abschalten der Induktivität (70) den ersten Schalter (50) und den zweiten Schalter (52) gleichzeitig zu öffnen.

4. Stromversorgungsschaltung (2) nach einem der vorhergehenden Ansprüche, wobei der zweite Schalter (52) eingangsseitig von dem selektiv leitenden Bauteil in dem zweiten Stromversorgungspfad (40) angeordnet ist.

5. Stromversorgungsschaltung (2) nach einem der vorhergehenden Ansprüche,
wobei das selektiv leitende Bauteil ein unidirektional leitendes Bauteil (54) ist und das unidirektional leitende Bauteil (54) mindestens eine Freilaufdiode aufweist bzw. aus mindestens einer Freilaufdiode besteht,
oder
wobei das selektiv leitende Bauteil ein gesteuertes selektiv leitendes Bauteil (58) ist und die Stromversorgungsschaltung (2) eingerichtet ist, das gesteuerte selektiv leitende Bauteil stromleitend zu machen, wenn der zweite Schalter (52) geöffnet ist.

6. Stromversorgungsschaltung (2) nach einem der vorhergehenden Ansprüche, wobei der erste Schalter (50) einen schaltbaren Hauptpfad und einen Nebenpfad aufweist, wobei der Nebenpfad bei Anliegen der Begrenzungsspannung leitend ist.

7. Stromversorgungsschaltung (2) nach einem der vorhergehenden Ansprüche, wobei der erste Schalter (50) eine antiparallele Diode aufweist, deren Durchbruchspannung im Wesentlichen der Begrenzungsspannung entspricht.

8. Stromversorgungsschaltung (2) nach einem der vorhergehenden Ansprüche, wobei die Begrenzungsspannung zwischen 40 V und 80 V, insbesondere zwischen 60 V und 70 V, ist.

9. Stromversorgungsschaltung (2) nach einem der vorhergehenden Ansprüche, wobei der erste Stromversorgungspfad (30) im Betrieb eine Stromleitung von der externen elektrischen Energiequelle (80) zu der Induktivität (70) bildet und der zweite Stromversorgungspfad (40) im Betrieb eine Stromleitung von der Induktivität (70) zu der externen elektrischen Energiequelle (80) bildet.

10. Stromversorgungsschaltung (2) nach einem der vorhergehenden Ansprüche,
wobei die Stromversorgungsschaltung (2) eingerichtet ist, mit einer externen elektrischen Energiequelle (80) mit einer Versorgungsspannung von zwischen 5 V und 50 V, insbesondere von zwischen 10 V und 35 V, gekoppelt zu werden;
und/oder
wobei die Stromversorgungsschaltung (2) eingerichtet ist, eine Induktivität (70) mit einer im Betrieb gespeicherten Energie von zwischen 50 mJ und 300 mJ, insbesondere mit einer im Betrieb gespeicherten Energie von zwischen 100 mJ und 150 mJ, mit Strom zu versorgen.

11. Stromversorgungsschaltung (2) nach einem der vorhergehenden Ansprüche, wobei die Induktivität (70) eine Spule (164) eines Elektromagneten eines Magnetventils ist.

12. Stromversorgungsschaltung (2) nach einem der vorhergehenden Ansprüche, weiterhin aufweisend:
einen dritten Ausgangspol (26), wobei eine zweite Induktivität (72) zwischen dem dritten Ausgangspol (26) und dem zweiten Stromversorgungspfad (40), insbesondere zwischen dem dritten Ausgangspol (26) und dem zweiten Ausgangspol (24), anschließbar ist; und
einen dritten Schalter (56), der zwischen dem ersten Stromversorgungspfad (30) und dem dritten Ausgangspol (26) angeordnet ist, wobei der dritte Schalter (56) eine Begrenzungsspannung aufweist, bei der er unabhängig vom Öffnungszustand leitend ist.

13. Ventilanordnung (100) für ein Bremssystem eines Kraftfahrzeugs,
wobei die Ventilanordnung ein Magnetventil mit einem Elektromagneten zur Steuerung des Magnetventils und eine Stromversorgungsschaltung (2) nach einem der vorhergehenden Ansprüche aufweist, wobei der Elektromagnet des Magnetventils mit dem Ausgangsanschluss (20) der Stromversorgungsschaltung gekoppelt ist,
wobei die Ventilanordnung insbesondere eine Mehrzahl von Magnetventilen aufweist, von denen jedes einen Elektromagneten zur Steuerung des jeweiligen Magnetventils hat und deren Elektromagneten mit dem Ausgangsanschluss (20) der Stromversorgungsschaltung (2) gekoppelt sind.

14. Bremssystem (200) für ein Kraftfahrzeug (300), ausweisend eine Ventilanordnung (100) nach Anspruch 13.

15. Verfahren zur Stromversorgung eines Aktuators eines Magnetventils, aufweisend:
Bereitstellen von Strom von einer externen elektrischen Energiequelle (80) an eine Induktivität (70) des Aktuators des Magnetventils;
für das Abschalten der Induktivität (70), Öffnen eines ersten Schalters (50), welcher eine Begrenzungsspannung aufweist, bei der er unabhängig vom Öffnungszustand leitend ist, und Öffnen eines zweiten Schalter (52);
mit Hilfe des Öffnens des ersten Schalters (50) und des zweiten Schalters (52), Verursachen eines Löschstroms in einem Löschkreis, welcher den ersten Schalter (50), die Induktivität (70) und ein selektiv leitendes Bauteil umfasst, wobei das selektiv leitende Bauteil ein unidirektional leitendes Bauteil (54) oder ein gesteuertes selektiv leitendes Bauteil (58) ist;
wobei das Öffnen des zweiten Schalters (52) den Löschkreis von der externen elektrischen Energiequelle (80) entkoppelt.

## Claims

1. Power supply circuit (2) for an actuator of a solenoid valve, comprising:
an input terminal (10) with a first input pole (12) and a second input pole (14), wherein the input terminal (10) is coupleable with an external electrical power source (80);
an output terminal (20) with a first output pole (22) and a second output pole (24), wherein the output terminal (20) is coupleable with an inductance (70) of the actuator of the solenoid valve;
a first power supply path (30), which connects the first input terminal (12) with the first output terminal (22);
a second power supply path (40), which connects the second input terminal (14) with the second output terminal (24);
a selectively conductive component that is coupled between the second power supply path (40) and the first power supply path (30), wherein the selectively conductive component is a unidirectionally conductive component (54) or a controlled selectively conductive component (58);
a first switch (50), which is arranged on the output side of the selectively conductive component in the first power supply path (30), wherein the first switch (50) has a limiting voltage at which it is conductive regardless of the open state; and
a second switch (52), which is arranged on the input side of the selectively conductive component in the first power supply path (30) or the second power supply path (40);
wherein the power supply circuit (2) is configured to open the first switch (50) and the second switch (52) for disconnecting the inductance (70) and to provide an extinguishing circuit, which includes the first switch (52), the inductance (70), and the selectively conductive component.

2. Power supply circuit (2) according to claim 1, wherein the power supply circuit (2) is configured to open the first switch (50) and the second switch (52) for the disconnection of the inductance (70) at a time interval of no more than 0.2 ms, particularly at a time interval of no more than 0.1 ms, and more particularly at a time interval of no more than 0.05 ms.

3. Power supply circuit (2) according to claim 1 or 2,
wherein the power supply circuit (2) is configured
to open the second switch (52) before the first switch (50) for switching off the inductance (70),
or
wherein the power supply circuit (70) is configured to open the first switch (50) before the second switch (52) for switching off the inductance (70),
or
wherein the power supply circuit (70) is configured to open the first switch (50) and the second switch (52) simultaneously for switching off the inductance (70).

4. Power supply circuit (2) according to any one of the preceding claims, wherein the second switch (52) is arranged on the input side of the selectively conductive component in the second power supply path (40).

5. Power supply circuit (2) according to any one of the preceding claims,
wherein the selectively conductive component is a unidirectionally conductive component (54), and the unidirectionally conductive component (54) comprises at least one freewheeling diode or consists of at least one freewheeling diode,
or
wherein the selectively conductive component is a controlled selectively conductive component (58), and the power supply circuit (2) is arranged to make the controlled selectively conductive component conductive when the second switch (52) is open.

6. Power supply circuit (2) according to any one of the preceding claims, wherein the first switch (50) has a switchable main path and a secondary path, wherein the secondary path is conductive when the limiting voltage is applied.

7. Power supply circuit (2) according to any one of the preceding claims, wherein the first switch (50) has an anti-parallel diode, the breakdown voltage of which essentially corresponds to the limiting voltage.

8. Power supply circuit (2) according to any one of the preceding claims, wherein the limiting voltage is between 40 V and 80 V, particularly between 60 V and 70 V.

9. Power supply circuit (2) according to any one of the preceding claims, wherein the first power supply path (30) forms a power line from the external electrical power source (80) to the inductance (70) during operation, and the second power supply path (40) forms a power line from the inductance (70) to the external electrical power source (80) during operation.

10. Power supply circuit (2) according to any one of the preceding claims,
wherein the power supply circuit (2) is configured to be coupled with an external electrical energy source (80) with a supply voltage of between 5 V and 50 V, particularly between 10 V and 35 V;
and/or
wherein the power supply circuit (2) is configured to supply current to an inductance (70) with energy stored during operation from between 50 mJ and 300 mJ, particularly with energy stored during operation from between 100 mJ and 150 mJ.

11. Power supply circuit (2) according to any one of the preceding claims, wherein the inductance (70) is a coil (164) of an electromagnet of a solenoid valve.

12. Power supply circuit (2) according to any one of the preceding claims, further comprising:
a third output terminal (26), wherein a second inductance (72) can be connected between the third output terminal (26) and the second power supply path (40), in particular between the third output terminal (26) and the second output terminal (24); and
a third switch (56), which is arranged between the first power supply path (30) and the third output terminal (26), wherein the third switch (56) has a limiting voltage at which it is conductive regardless of the open state.

13. Valve arrangement (100) for a braking system of a motor vehicle,
wherein the valve arrangement comprises a solenoid valve with an electromagnet for controlling the solenoid valve and a power supply circuit (2) according to any one of the preceding claims, wherein the electromagnet of the solenoid valve is coupled to the output terminal (20) of the power supply circuit,
wherein the valve arrangement particularly comprises a plurality of solenoid valves, each of which has an electromagnet for controlling the respective solenoid valve, and whose electromagnets are coupled with the output terminal (20) of the power supply circuit (2).

14. Braking system (200) for a motor vehicle (300), comprising a valve arrangement (100) according to claim 13.

15. Method for supplying power to an actuator of a solenoid valve, comprising:
providing power from an external electrical energy source (80) to an inductance (70) of the actuator of the solenoid valve;
for switching off the inductance (70), opening a first switch (50), which has a limiting voltage at which it is conductive regardless of the open state, and opening a second switch (52);
with the help of opening the first switch (50) and the second switch (52), causing an extinguishing current in an extinguishing circuit, which includes the first switch (50), the inductance (70), and a selectively conductive component, wherein the selectively conductive component is a unidirectional conductive component (54) or a controlled selectively conductive component (58);
wherein the opening of the second switch (52) decouples the extinguishing circuit from the external electrical power source (80).

## Revendications

1. Circuit d'alimentation électrique (2) pour un actionneur d'une électrovanne, présentant :
une borne d'entrée (10) avec un premier pôle d'entrée (12) et un deuxième pôle d'entrée (14), dans lequel la borne d'entrée (10) peut être couplée à une source d'énergie électrique externe (80) ;
une borne de sortie (20) avec un premier pôle de sortie (22) et un deuxième pôle de sortie (24), dans lequel la borne de sortie (20) peut être couplée à une inductance (70) de l'actionneur de l'électrovanne ;
un premier chemin d'alimentation électrique (30) qui connecte le premier pôle d'entrée (12) au premier pôle de sortie (22) ;
un deuxième chemin d'alimentation électrique (40) qui connecte le deuxième pôle d'entrée (14) au deuxième pôle de sortie (24) ;
un composant sélectivement conducteur qui est couplé entre le deuxième chemin d'alimentation électrique (40) et le premier chemin d'alimentation électrique (30), dans lequel le composant sélectivement conducteur est un composant conducteur unidirectionnel (54) ou un composant sélectivement conducteur commandé (58) ;
un premier commutateur (50) qui est disposé côté sortie du composant sélectivement conducteur dans le premier chemin d'alimentation électrique (30), dans lequel le premier commutateur (50) présente une tension de limitation à laquelle il est conducteur indépendamment de l'état d'ouverture ; et
un deuxième commutateur (52) qui est disposé côté entrée du composant sélectivement conducteur dans le premier chemin d'alimentation électrique (30) ou le deuxième chemin d'alimentation électrique (40) ;
dans lequel le circuit d'alimentation électrique (2) est configuré pour ouvrir le premier commutateur (50) et le deuxième commutateur (52) pour couper l'inductance (70) et fournir un circuit d'extinction, lequel comprend le premier commutateur (52), l'inductance (70) et le composant sélectivement conducteur.

2. Circuit d'alimentation électrique (2) selon la revendication 1, dans lequel le circuit d'alimentation électrique (2) est configuré pour ouvrir le premier commutateur (50) et le deuxième commutateur (52) pour couper l'inductance (70) à un intervalle de temps d'au plus 0,2 ms, en particulier à un intervalle de temps d'au plus 0,1 ms, plus particulièrement à un intervalle de temps d'au plus 0,05 ms.

3. Circuit d'alimentation électrique (2) selon la revendication 1 ou 2,
dans lequel le circuit d'alimentation électrique (2) est configuré pour ouvrir le deuxième commutateur (52) avant le premier commutateur (50) pour couper l'inductance (70),
ou
dans lequel le circuit d'alimentation électrique (70) est configuré pour ouvrir le premier commutateur (50) avant le deuxième commutateur (52) pour couper l'inductance (70),
ou
dans lequel le circuit d'alimentation électrique (70) est configuré pour ouvrir simultanément le premier commutateur (50) et le deuxième commutateur (52) pour couper l'inductance (70).

4. Circuit d'alimentation électrique (2) selon l'une quelconque des revendications précédentes, dans lequel le deuxième commutateur (52) est disposé côté entrée du composant sélectivement conducteur dans le deuxième chemin d'alimentation électrique (40).

5. Circuit d'alimentation électrique (2) selon l'une quelconque des revendications précédentes,
dans lequel le composant sélectivement conducteur est un composant conducteur unidirectionnel (54) et le composant conducteur unidirectionnel (54) présente au moins une diode de roue libre ou est constitué d'au moins une diode de roue libre,
ou
dans lequel le composant sélectivement conducteur est un composant sélectivement conducteur commandé (58), et le circuit d'alimentation électrique (2) est configuré pour rendre conducteur le composant sélectivement conducteur commandé électriquement lorsque le deuxième commutateur (52) est ouvert.

6. Circuit d'alimentation électrique (2) selon l'une quelconque des revendications précédentes, dans lequel le premier commutateur (50) présente un chemin principal commutable et un chemin secondaire, dans lequel le chemin secondaire est conducteur lorsqu'une tension de limitation est appliquée.

7. Circuit d'alimentation électrique (2) selon l'une quelconque des revendications précédentes, dans lequel le premier commutateur (50) présente une diode antiparallèle dont la tension de claquage correspond sensiblement à la tension de limitation.

8. Circuit d'alimentation électrique (2) selon l'une quelconque des revendications précédentes, dans lequel la tension de limitation est entre 40 V et 80 V, en particulier entre 60 V et 70 V.

9. Circuit d'alimentation électrique (2) selon l'une quelconque des revendications précédentes, dans lequel le premier chemin d'alimentation électrique (30) forme en fonctionnement une ligne électrique de la source d'énergie électrique externe (80) à l'inductance (70) et le deuxième chemin d'alimentation électrique (40) forme en fonctionnement une ligne électrique de l'inductance (70) à la source d'énergie électrique externe (80).

10. Circuit d'alimentation électrique (2) selon l'une quelconque des revendications précédentes,
dans lequel le circuit d'alimentation électrique (2) est configuré pour être couplé à une source d'énergie électrique externe (80) avec une tension d'alimentation entre 5 V et 50 V, en particulier entre 10 V et 35 V ;
et/ou
dans lequel le circuit d'alimentation électrique (2) est configuré pour alimenter en courant une inductance (70) avec une énergie emmagasinée en fonctionnement entre 50 mJ et 300 mJ, en particulier avec une énergie emmagasinée en fonctionnement entre 100 mJ et 150 mJ.

11. Circuit d'alimentation électrique (2) selon l'une quelconque des revendications précédentes, dans lequel l'inductance (70) est une bobine (164) d'un électroaimant d'une électrovanne.

12. Circuit d'alimentation électrique (2) selon l'une quelconque des revendications précédentes, présentant en outre :
un troisième pôle de sortie (26), dans lequel une deuxième inductance (72) peut être raccordée entre le troisième pôle de sortie (26) et le deuxième chemin d'alimentation électrique (40), en particulier entre le troisième pôle de sortie (26) et le deuxième pôle de sortie (24) ; et
un troisième commutateur (56) qui est disposé entre le premier chemin d'alimentation électrique (30) et le troisième pôle de sortie (26), dans lequel le troisième commutateur (56) présente une tension de limitation à laquelle il est conducteur indépendamment de l'état d'ouverture.

13. Agencement de vanne (100) pour un système de freinage d'un véhicule automobile,
dans lequel l'agencement de vanne présente une électrovanne avec un électroaimant pour la commande de l'électrovanne et un circuit d'alimentation électrique (2) selon l'une quelconque des revendications précédentes, dans lequel l'électroaimant de l'électrovanne est couplé à la borne de sortie (20) du circuit d'alimentation électrique,
dans lequel l'agencement de vanne présente en particulier une pluralité d'électrovannes dont chacune présente un électroaimant pour la commande de l'électrovanne respective et dont les électroaimants sont couplés à la borne de sortie (20) du circuit d'alimentation électrique (2).

14. Système de freinage (200) pour un véhicule automobile (300), présentant un agencement de vanne (100) selon la revendication 13.

15. Procédé d'alimentation électrique d'un actionneur d'une électrovanne, comprenant :
la fourniture de courant depuis une source d'énergie électrique externe (80) à une inductance (70) de l'actionneur de l'électrovanne ;
pour la coupure de l'inductance (70), l'ouverture d'un premier commutateur (50), lequel présente une tension de limitation à laquelle il est conducteur indépendamment de l'état d'ouverture, et l'ouverture d'un deuxième commutateur (52) ;
à l'aide de l'ouverture du premier commutateur (50) et du deuxième commutateur (52), la provocation d'un courant d'extinction dans un circuit d'extinction, lequel comprend le premier commutateur (50), l'inductance (70) et un composant sélectivement conducteur, dans lequel le composant sélectivement conducteur est un composant conducteur unidirectionnel (54) ou un composant sélectivement conducteur commandé (58) ;
dans lequel l'ouverture du deuxième commutateur (52) découple le circuit d'extinction de la source d'énergie électrique externe (80).
